(19) Europäisches Patentamt
European Patent Office
Office européen des brevets

(11) EP 4 687 276 A1

(12) EUROPEAN PATENT APPLICATION

(43) Date of publication:
04.02.2026 Bulletin 2026/06

(21) Application number: 24386093.9

(22) Date of filing: 30.07.2024

(51) International Patent Classification (IPC):
H02M 1/32 $^{(2007.01)}$     H02M 3/335 $^{(2006.01)}$

(52) Cooperative Patent Classification (CPC):
H02M 1/327; H02M 1/0025; H02M 3/01;
H02M 3/33515; H02M 3/33571; H02M 3/33576

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Hamilton Sundstrand Corporation
Charlotte, NC 28217 (US)

(72) Inventors:
• MCLEAN, Andrew
Halesowen B62 8TR (GB)
• SKOULAXINOS, Stefanos
Cannock WS12 4UR (GB)

(74) Representative: Dehns
10 Old Bailey
London EC4M 7NG (GB)

(54) POWER CONVERTER

(57) A method (300) of operating a power converter for converting an input voltage and/or an input current to an output voltage and/or an output current. The method includes determining (310) a temperature metric, representative of a temperature of the power converter during a period of operation, based on a temperature of the power converter at an end of a preceding period of operation. The method includes comparing (320) the temperature metric to a reference temperature metric, representative of a reference temperature. The method includes determining (330) a value of a control parameter, used to control the output current and/or the output voltage of the power converter, based on the comparison (320). The method includes operating (340) the power converter using the control parameter. The temperature of the power converter depends on the value of the control parameter.

300 ⟶

```
┌─────────────────────┐
│ Determine a          │ ⟿ 310
│ temperature metric for│
│ the power converter  │
└─────────────────────┘
          │
          ▼
┌─────────────────────┐
│ Compare the          │ ⟿ 320
│ temperature metric to a│
│ reference temperature │
│ metric               │
└─────────────────────┘
          │
          ▼
┌─────────────────────┐
│ Adjusting a value of a│ ⟿ 330
│ control parameter     │
│ based on the          │
│ comparison           │
└─────────────────────┘
          │
          ▼
┌─────────────────────┐
│ Operate the power     │ ⟿ 340
│ converter using the   │
│ adjusted control      │
│ parameter            │
└─────────────────────┘
```

FIG. 3

EP 4 687 276 A1

## Description

### Technical Field

This disclosure relates to power converters.

### Background

Power converters used in aerospace and automotive electronic control units are designed for a rated maximum output power. Power demand in excess of this rated maximum output power can result in excessive power dissipation and/or potential failure.

Protection strategies employed to ensure the maximum rated output power is not exceeded include limiting the power converter's output current to the rated value, thereby causing the output voltage to drop with load current demand in excess of the rated value. This strategy does not necessarily provide protection for devices whose temperature rise is not dependent upon the current being limited. Other schemes are arranged to permit output current in excess of rated value for a specified period of time, before then disabling the converter output.

Both types of schemes are not temperature dependent and can potentially lead to excessive device temperatures and possible failure. Complete loss of output with the time-based scheme is also undesirable.

### Summary

The present disclosure provides a method of operating a power converter for converting an input voltage and/or an input current to an output voltage and/or an output current;
wherein the method comprises:

determining a temperature metric, representative of a temperature of the power converter during a period of operation, based on a temperature of the power converter at an end of a preceding period of operation;
comparing the temperature metric to a reference temperature metric, representative of a reference temperature;
determining a value of a control parameter, used to control the output current and/or the output voltage of the power converter, based on the comparison of the temperature metric to the reference temperature metric; and
operating the power converter using the control parameter so as to control the temperature of the power converter.

Examples of the disclosed method may enable safer operation of the power converter by taking into account the temperature of the power converter at the end of a period of operation during a subsequent period of operation.

The power converter may be a power converter of any suitable type. Examples of suitable types of power converters include asymmetric half-bridges, LLC converters, flying-capacitor multi-level converters, zeta asymmetric half-bridges, and the like.

Any of the temperature metrics may be the temperature that the temperature metric is representative of. For instance, the temperature metric may be the temperature of the power converter during the period of operation and/or the reference temperature metric may be the reference temperature.

As the power converter is operated using the control parameter to control the temperature of the power converter, it will be understood that the temperature of the power converter depends on the value of the control parameter.

The temperature of the power converter may not depend exclusively on the value of the control parameter. For example, the temperature of the control parameter may also depend on any of: an ambient temperature (e.g. a temperature of the power converter's surroundings); a (e.g. initial) temperature of the power converter at the start of the period of operation; and/or other control parameters (e.g. used to control operation of the power converter).

Preceding will be understood to mean that there are no intervening periods of operation of the power converter between the period of operation and the preceding period of operation.

The power converter may be turned off for a period of time between the preceding period of operation and the period of operation. Thus, the method may comprise turning off the power converter between the preceding period of operation and the period of operation.

The temperature metric, representative of the temperature of the power converter during the period of operation, is based on the temperature of the power converter at an end of the preceding period of operation. Thus, in some examples, the method comprises operating the power converter in the preceding period of operation. In some examples, the method comprises determining a preceding temperature metric, representative of the temperature of the power converter at the end of the preceding period of operation.

The method may comprise determining the temperature metric, representative of the temperature of the power converter during the period of operation, based on the preceding temperature metric, representative of the temperature of the power converter at the end of the preceding period of operation.

In some examples, the method comprises storing the preceding temperature and/or the preceding temperature metric (e.g. on a memory of the power converter and/or on an external memory). In some examples, the method comprises storing a time associated with the preceding temperature metric and/or the preceding temperature (e.g. on a memory of the power converter and/or on an external memory).

In some examples, the method comprises storing the temperature metric (e.g. on a memory of the power converter and/or on an external memory). In some examples, the method comprises storing a time associated with the temperature metric and/or the temperature (e.g. on a memory of the power converter and/or on an external memory).

In some examples, the method comprises determining the temperature metric without direct measurement of the temperature of the power converter.

In some examples, the method comprises using a (e.g. computer implemented) thermal model to determine the temperature metric.

In some examples, determining the temperature metric is based on an ambient temperature. Thus, the method may comprise determining (e.g. measuring) the ambient temperature and/or an ambient temperature metric representative of the ambient temperature. A high ambient temperature may reduce a rate of cooling of the power converter. A low ambient temperature may increase a rate of cooling of the power converter.

An ambient temperature may be defined as a temperature of the power converter's surroundings and/or a temperature that the power converter is expected to cool to if turned off and/or not operated, e.g. for a prolonged period of time.

In some examples, determining the value of the control parameter comprises adjusting a baseline value of the control parameter based on the temperature metric.

A baseline value of the control parameter may be defined as a control parameter that would otherwise be used to control operation of the power converter, e.g. in the absence of any adjustment based on the comparison of the temperature metric and the reference temperature metric.

The baseline value of the control parameter may be representative of a target output current and/or a target output voltage of the power converter.

In some examples, determining the value of the control parameter comprises interpolating between two values based on the comparison of the temperature metric to the reference temperature metric. Operating the power converter with one of the two values may control the power converter to provide a target output current and/or a target output voltage (e.g. one of the two values of the control parameter may be a baseline value of the control parameter). Operating the power converter with one of the two values (e.g. the other of the two values) may control the power converter to provide zero output current and/or zero output voltage. Thus, the value of the control parameter may be determined so as to gradually reduce the output current and/or output voltage (e.g. from a target value to zero) as the temperature of the power converter increases.

In some examples, the method comprises: determining a difference factor with a value between zero and one, exclusive, based on a comparison of the temperature metric with the reference temperature metric. The method may comprise determining the difference factor using a (e.g. computer implemented) limit map.

In some examples, determining the difference factor (e.g. using the limit map) comprises using a look-up table to look-up the difference factor based on the temperature metric.

In some examples, determining the value of the control parameter comprises multiplying the baseline value of the control parameter with the difference factor. The method may comprise multiplying the baseline value of the control parameter with the difference factor using a (e.g. computer implemented) multiplier.

In some examples, determining the difference factor comprises: normalising a difference between the temperature metric and the reference temperature metric on a scale between one and zero.

In some examples, a value of one on the scale is representative of the temperature of the power converter being less than or equal to the reference temperature. In some examples there may be no adjustment to a baseline control parameter if the temperature of the power converter is less than or equal to the reference temperature.

In some examples, a value of zero on the scale is representative of the temperature of the power converter being greater than or equal to a maximum temperature metric, representative of a maximum temperature of the power converter. Operating the power converter with a control parameter that has a value of zero may control the power converter to provide zero output current and/or zero output voltage. In some examples, the output current and/or the output voltage may be reduced to zero if the temperature of the power converter exceeds the maximum temperature.

In some examples, the power converter comprises an inverter; and the control parameter is at least one of a switching frequency of the inverter and a pulse width of the inverter. In such examples, the output current and/or the output voltage of the power converter may depend on the switching frequency and/or the pulse width of the inverter. Hence, it may be possible to control the output current and/or output voltage of the power converter by adjusting the switching frequency and/or pulse width of the inverter.

The method may comprise operating the inverter with a variable switching frequency and, e.g., a fixed duty cycle (e.g. using a control technique known as pulse frequency modulation). In such examples, the method may comprise reducing the output voltage by increasing the switching frequency as the temperature of the power converter increases (e.g. to reduce further heating based on the output voltage).

The method may comprise operating the inverter with a variable duty cycle and, e.g., a fixed switching frequency (e.g. using a control technique known as pulse width modulation). In such examples, the method may comprise reducing the output voltage by reducing the inverter's duty cycle as the temperature of the power converter increases (e.g. to reduce further heating based on the output voltage).

In some examples, the method comprises determining an initial temperature metric of the power converter, representative of the temperature of the power converter at the start of the period of operation, based on the preceding temperature metric; and determining the temperature metric based on the initial temperature metric.

In some examples, the method comprises determining the initial temperature metric without direct measurement of the temperature of the power converter.

The initial temperature metric may be determined by interpolating between an ambient temperature metric, representative of an ambient temperature, and the preceding temperature metric.

In some examples, determining the initial temperature metric is based on a duration of time between the period of operation and the preceding period of operation. For instance, in examples where the initial temperature metric is determined by interpolating between an ambient temperature metric and the preceding temperature metric, the interpolation may be based on the duration of time between the periods of operation. For a relatively short period of time between periods of operation, the initial temperature metric may be determined to be relatively close to the preceding temperature metric. For a relatively long period of time between periods of operation, the initial temperature metric may be determined to be relatively close to the ambient temperature metric.

In some examples, determining the initial temperature metric is based on an ambient temperature.

In some examples, determining the initial temperature metric comprises interpolating between the preceding temperature metric and an ambient temperature metric, representative of the ambient temperature.

In some examples, determining the temperature metric is based on a duration of time between the period of operation and the preceding period of operation. For instance, the temperature metric may be determined based on an initial temperature metric (at the start of the period of operation), and the initial temperature metric may be determined based on the preceding temperature metric and the duration between the periods of operation (e.g. as previously outlined).

In some examples, determining the temperature metric based on the initial temperature metric comprises adding a temperature metric change to the initial temperature metric; wherein the temperature metric change is representative of a temperature change of the power converter since the start of the period of operation. Adding a temperature metric change to the initial temperature metric may be carried out using a (e.g. computer implemented) summer.

In some examples, the method comprises determining the temperature metric change without direct measurement of the temperature of the power converter.

In some examples, the method comprises determining the temperature metric change using a (e.g. computer implemented) thermal model.

In some examples, determining the temperature metric change of the power converter (e.g. using the thermal model) comprises: determining an amount of electrical energy dissipated in the power converter, e.g. since the start of the period of operation. For example, the amount of electrical energy dissipated in the power converter may be determined based on the input and/or the output current and an electrical resistance of the power converter. The amount of electrical energy dissipated in the power converter may be determined by multiplying a square of the input and/or the output current with an electrical resistance of the power converter. Such an electrical resistance of the power converter may be representative of an input and/or an output electrical resistance of the power converter.

In some examples, determining the temperature metric change of the power converter (e.g. using the thermal model) comprises: determining an amount of thermal energy dissipated in the power converter, e.g. based on an amount of electrical energy dissipated in the power converter and a thermal resistance of the power converter. For instance, determining an amount of thermal energy dissipated in the power converter may comprise multiplying an amount of electrical energy dissipated in the power converter with a thermal resistance of the power converter. Such a thermal resistance may be representative of an input and/or an output thermal resistance of the power converter.

In some examples, determining the temperature metric change of the power converter (e.g. using the thermal model) comprises: determining the temperature metric change of the power converter based on an amount of thermal energy dissipated in the power converter and a thermal capacitance of the power converter.

In some examples, the method comprises: determining a second temperature metric, representative of a second temperature of the power converter; determining the value of the control parameter of the power converter based on the second temperature metric; and operating the power converter using the control parameter so as to control the second temperature of the power converter.

It will be understood that in such examples, the (e.g. first) temperature and the second temperature are both affected by operation of the power converter.

The (e.g. first) temperature of the power converter may be a temperature associated with a first component (e.g. a first component of the power converter or a first component connected to the power converter).

The second temperature of the power converter may be a temperature associated with a second component (e.g. a second component of the power converter or a second component connected to the power converter).

The (e.g. first) temperature may depend on a current or voltage associated with operation of the power converter; e.g. the power converter's input current or voltage, or the power converter's output current or voltage.

The second temperature may depend on a current or voltage associated with operation of the power converter; e.g. the power converter's input current or voltage, or the power converter's output current or voltage.

The (e.g. first) temperature and the second temperature may depend on different currents or voltages associated with the power converter. For example, the (e.g. first) temperature of the power converter may depend on the power converter's output voltage while the second temperature may depend on the power converter's output current.

The first and second temperatures may be independent of one another. For instance, in examples where the first temperature is a temperature associated with a first component and the second temperature is a temperature associated with a second component, the first component and the second component may not be thermally coupled.

The disclosure also provides a power converter for converting an input voltage and/or an input current to an output voltage and/or an output current;
wherein the power converter comprises a controller arranged to:

> determine a temperature metric, representative of a temperature of the power converter during a period of operation, based on a temperature of the power converter at an end of a preceding period of operation;
> compare the temperature metric to a reference temperature metric, representative of a reference temperature;
> determine a value of a control parameter, used to control the output current and/or the output voltage of the power converter, based on the comparison of the temperature metric to the reference temperature metric; and
> operate the power converter using the control parameter so as to control the temperature of the second power converter.

It will be appreciated that the method of operating a power converter provided by the disclosure may be used to operate the power converter provided by the disclosure. Thus, any of the, e.g. optional, features of the method of operating a power converter may apply equally to the power converter itself and/or vice-versa.

The controller may be arranged to determine an initial temperature metric, representative of a temperature of the power converter at the start of the period of operation, based on the preceding temperature metric.

The controller may comprise (or be configured to use) a (e.g. computer implemented) summer arranged to add a temperature metric change, representative of a temperature change of the power converter since the start of the period of operation, to the initial temperature metric.

The controller may comprise (or be configured to use) a (e.g. computer implemented) thermal model arranged to determine the temperature metric change.

The controller may comprise (or be configured to use) a (e.g. computer implemented) limit map arranged to determine a difference factor with a value between zero and one, exclusive, based on a comparison of the temperature metric with the reference temperature metric.

The controller may comprise (or be configured to use) a (e.g. computer implemented) multiplier arranged to multiply a baseline value of the control parameter with the difference factor.

In some examples, the controller is arranged to: determine the temperature metric without direct measurement of the temperature of the power converter.

In some examples, the controller is arranged to determine the temperature metric based on a duration of time between the period of operation and the preceding period of operation.

In some examples, the controller is arranged to determine the temperature metric based on an ambient temperature.

In some examples, the controller is arranged to determine the value of the control parameter by at least interpolating between two values based on the comparison of the temperature metric to the reference temperature metric

In some examples, the controller is arranged to determine the value of the control parameter by at least adjusting a baseline value of the control parameter based on the temperature metric.

In some examples, the controller is arranged to determine a difference factor with a value between zero and one, exclusive, based on the comparison of the temperature metric with the reference temperature metric; wherein adjusting the baseline value of the control parameter comprises: multiplying the baseline value of the control parameter with the difference factor.

In some examples, the controller is arranged to determine the difference factor by at least normalising a difference between the temperature metric and the reference temperature metric on a scale between one and zero; wherein a value of one on the scale is representative of the temperature of the power converter being less than or equal to the reference temperature.

In some examples, a value of zero on the scale is representative of the temperature of the power converter being greater than or equal to a maximum temperature metric, representative of a maximum temperature of the power converter.

In some examples, the controller is arranged to determine an initial temperature metric of the power converter, representative of the temperature of the power converter at the start of the period of operation, based on the preceding temperature metric; and determine the temperature metric is based on the initial temperature metric.

In some examples, the controller is arranged to determine the initial temperature metric based on one or more of: a duration of time between the period of operation and the preceding period of operation; and an ambient temperature.

In some examples, the controller is arranged to: determine the initial temperature metric by at least interpolating between the preceding temperature metric and an ambient temperature metric, representative of the ambient temperature.

In some examples, the controller is arranged to:

determine a second temperature metric, representative of a second temperature of the power converter;

determine the value of the control parameter of the power converter based on the second temperature metric; and

operate the power converter using the control parameter so as to control the second temperature of the power converter.

Features of any aspect or embodiment described herein may, wherever appropriate, be applied to any other aspect or embodiment described herein. Where reference is made to different embodiments or sets of embodiments, it should be understood that these are not necessarily distinct but may overlap.

**Brief Description of Drawings**

One or more non-limiting examples will now be described, by way of example only, and with reference to the accompanying figures in which:

Figure 1 shows a power converter for converting an input voltage to an output voltage;

Figure 2 shows a closed loop thermal estimator, which is part of the controller of the power converter shown in Figure 1;

Figure 3 shows a method of operating a power converter, such as the power converter shown in Figure 1, using a closed loop thermal estimator, such as the closed loop thermal estimator shown in Figure 2;

Figure 4 shows a method of determining a temperature metric for a power converter, which is performed as a step of the method shown in Figure 3;

Figure 5 shows a method of determining an initial temperature metric for the power converter, which is performed as a step of the method shown in Figure 4;

Figure 6 shows the output current and power as a function of time for a power converter, operated using a closed loop thermal estimator, for a range of different current demands;

Figure 7 shows the temperature of the power converter and the adjustment made to the current supplied to the load as a function of time for the power converter, operated using a closed loop thermal estimator, for the range of different current demands shown in Figure 6;

Figure 8 shows a closed loop thermal estimator arranged to control operation of a power converter based on temperatures of a plurality of different components of the power converter; and

Figure 9 shows a method of controlling operation of a power converter, wherein a temperature of each of a plurality of components of the power converter depends on a control parameter of the power converter.

**Detailed Description**

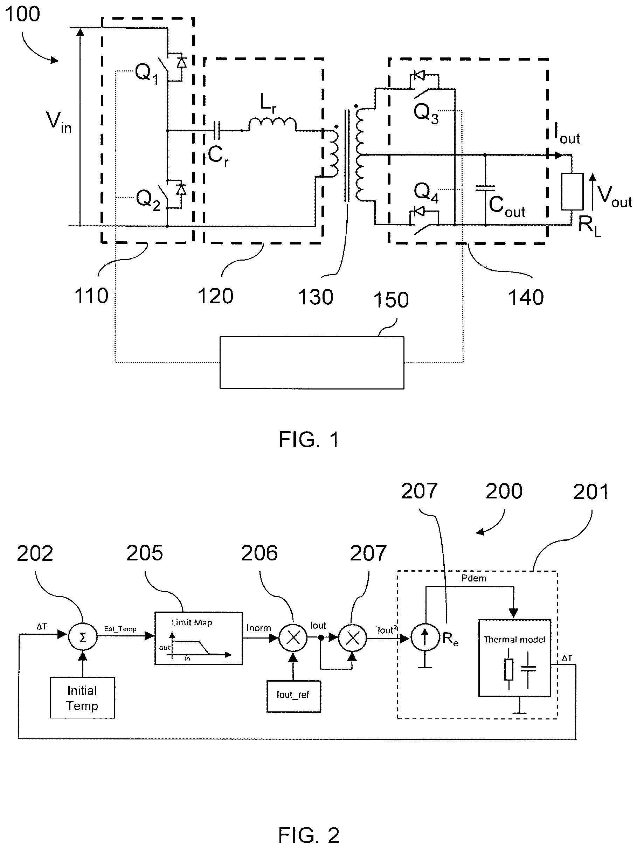

Figure 1 shows a power converter 100, configured to convert an input voltage $V_{in}$ to an output voltage $V_{out}$.

The power converter 100 is a LLC resonant converter, and includes an inverter 110, a resonant tank 120, a transformer 130 (which has an input winding and an output winding), a rectifier 140 and a controller 150. The power converter 100 shown in Figure 1 has as an LLC half-bridge circuit topology. In other examples, a different topology of power converter may be used, such as a flying-capacitor multi-level topology, a zeta asymmetric half-bridge topology, or the like.

The inverter 110 is a half-bridge inverter that includes a first switch $Q_1$ arranged in series with a second switch $Q_2$. In this example, the first switch $Q_1$ and the second switch $Q_2$ are metal-oxide-semiconductor field-effect transistors (MOSFETs).

The power converter 100 is configured to receive an input voltage $V_{in}$ from an attached voltage source in parallel with the inverter's 110 first switch $Q_1$ and the second switch $Q_2$.

The resonant tank 120 includes a resonant inductor $L_r$ arranged in series with a resonant capacitor $C_r$. The

resonant inductor $L_r$ and the resonant capacitor $C_r$ are arranged in parallel with the second switch $Q_2$ of the inverter, and in series with the input winding of the transformer 130.

The rectifier 140 includes two switches, a third switch $Q_3$ and a fourth switch $Q_4$, arranged to provide full-wave rectification of the centre-tapped output winding of the transformer 130. In this example, the third switch $Q_3$ and the fourth switch $Q_4$ are both MOSFETs.

The rectifier 140 switches are referred to as third $Q_3$ and fourth $Q_4$ switches, respectively, to differentiate them from the inverter 110 switches $Q_1$ and $Q_2$. However, it will be understood that this does not imply (or exclude) the presence of a first and second rectifier switch.

The rectifier 140 also includes a smoothing capacitor $C_{out}$, which is connected to a centre-tap of the transformer's 130 output winding at one end, and between the third switch $Q_3$ and the fourth switch $Q_4$ at the other end.

The power converter 100 is configured to provide an output voltage $V_{out}$ to an attached load $R_L$, connected in parallel with the smoothing capacitor $C_{out}$.

The controller 150 is arranged to control operation of the power converter 100. In particular, the controller 150 is arranged to control operation of the inverter 110 and the rectifier 140.

Operation of the power converter 100 will now be described with continued reference to Figure 1.

In use, the inverter 110 is operated to alternately close either the first switch $Q_1$ or the second switch $Q_2$, with a brief dead-time in between turning off one of the inverter 110 switches (one of the first switch $Q_1$ or the second switch $Q_2$) and turning on the other switch (the other of the first switch $Q_1$ or the second switch $Q_2$), to reduce the risk of creating a short-circuit across the inverter 110. This alternately provides a voltage of either $V_{in}$ or zero volts to the resonant tank 120.

In use, the frequency-dependent gain characteristics of the resonant tank 120 are utilised by adjusting the inverter 110 switching frequency to provide a regulated voltage to the input winding of the transformer 130. The voltage regulation provided by the resonant tank improves the efficiency of the power converter 100.

In use, the voltage provided across the input winding of the transformer 130 by the resonant tank 120 induces a voltage across the transformer's 130 output winding. The ratio of turns between the transformer's 130 input winding and the transformer's output winding may be configured so that the voltage is stepped-up or stepped-down. Alternatively, there may be a one-to-one relationship between the voltage applied to the input winding and the voltage induced in the output winding, e.g. if the transformer's input winding and the transformer's output winding have the same number of turns.

The transformer 130 is arranged to provide galvanic isolation between the input winding and the output winding. This may be useful to protect the load $R_L$ from a high input voltage $V_{in}$ (or current) or to protect a voltage source from a high output voltage $V_{out}$ (or current).

The rectifier 140 is operated to alternately close either the third switch $Q_3$ or the fourth switch $Q_4$ depending on the polarity of the voltage across the transformer's 130 output winding, with a brief dead-time in-between to reduce the risk of creating a short-circuit across the rectifier 140. Operating the rectifier 140 in this manner ensures that current always flows in the same direction to the load $R_L$.

The power converter 100 includes a voltage sensor (not shown) arranged to measure the output voltage $V_{out}$ and provide this measurement to the controller 150 for output voltage regulation.

The controller 150 is configured to determine the polarity of the voltage across the transformer's 130 output winding, e.g. based on operation of the inverter 110, to determine when to change the states of the rectifier switches $Q_3$ and $Q_4$ (e.g. from on to off or vice-versa).

In use, the smoothing capacitor $C_{out}$ filters out AC components of the voltage across it (e.g. noise from the switching of the inverter 110 switches $Q_1$ and $Q_2$ or from the rectifier switches $Q_3$ and $Q_4$) such that the power converter 100 provides a substantially DC output voltage $V_{out}$ to the load $R_L$.

In this example, the controller 150 is arranged to operate the inverter 110 with a variable switching frequency and a fixed duty cycle. This control technique is known as pulse frequency modulation (PFM). In other examples, the controller 150 may be arranged to operate the inverter 110 with a variable duty cycle, and a fixed switching frequency. This control technique is known as pulse width modulation (PWM).

In use, the output voltage $V_{out}$ can be increased by decreasing the switching frequency of the inverter 110. Conversely, the output voltage $V_{out}$ can be decreased by increasing the switching frequency of the inverter 110.

In various applications, the current $I_{out}$ and/or the voltage $V_{out}$ demand of the load $R_L$ may vary. Generally, power converters are rated (i.e. designed) to provide a maximum output power. However, the power converter 100 may need to exceed the rated output power to provide the current $I_{out}$ and voltage $V_{out}$ demanded by the load if, for example: (i) the load's $R_L$ current demand $I_{out}$ exceeds a certain threshold (e.g. for a fixed voltage $V_{out}$ demand); and/or (ii) the load's $R_L$ voltage demand $V_{out}$ exceeds a certain threshold (e.g. for a fixed current $I_{out}$ demand). Exceeding the output power, e.g. for an extended period of time, may result in the power converter overheating.

Figure 2 shows a computer implemented closed loop thermal estimator 200, which is used by the power converter's 100 controller 150. By using the closed loop thermal estimator 200, it is possible for the power converter's 100 output power to exceed the rated power, potentially resulting in heating of the power converter 100, until a certain device temperature of the power converter 100 is reached. Once this device temperature is reached, the closed loop thermal estimator 200 is configured to operate the power converter 100 in a manner that helps to prevent any further heating.

The computer implemented closed loop thermal estimator 200 includes a thermal model 201, a summer 202, , a limiter 205, a multiplier 206 and a second multiplier 207. In this example each of these components of the closed loop thermal estimator are implemented computationally Thus, these components of the thermal model 201 are representative of computational functions performed by the controller 150. In other examples, any of the components of the closed loop thermal estimator 200, and even the entire closed loop thermal estimator 200, may be a physical component of the controller 150.

The thermal model 201 is configured to determine a temperature change $\Delta T$ of the power converter 100, e.g. for a period of operation of the power converter 100.

One specific approach that the thermal model 201 may use to determine the temperature change $\Delta T$ of the power converter 100 will now be described, however it will be appreciated that there are many possible ways to determine a temperature change $\Delta T$ of the power converter (e.g. including direct measurement of the power converter's 100 temperature).

In this example, the thermal model 201 is configured to determine a power demand $P_{dem}$ of the power converter 100 by multiplying the square of the output current $I_{out}{}^2$ with an electrical resistance $R_e$ 208 of the power converter 100. This electrical resistance $R_e$ is representative of the electrical power dissipated in the power converter 100. The thermal model 201 is configured to determine an expected temperature change of the power converter 100 using the power demand $P_{dem}$ and the following equations.

Equation 1 is an example of a calculation that the thermal model 201 may use to calculate the temperature change $\Delta T$ of the power converter 100.

$$(1) \qquad \Delta T(t) = Tdc * \left(1 - e^{-\frac{t}{\tau}}\right)$$

The value $T_{dc}$ used in Equation 1 may be calculated using Equation 2, based on the power demand $P_{dem}$ of the power converter 100 and a thermal resistance $R_{th}$ of the power converter, which is representative of an amount of thermal energy dissipated in the power converter 100 per unit of electrical energy dissipated in the power converter 100 (e.g. as opposed to light, sound or the like).

$$(2) \qquad Tdc = Pdem * Rth = \left(Iout^2 * Re\right) * Rth$$

The time constant $\tau$ used in Equation 1 may be determined using Equation 3, where $C_{th}$ is the value of the thermal capacitance of the power converter 100, which is representative of the amount of thermal energy required to change the temperature of the power converter.

$$(3) \qquad \tau = Cth * Rth$$

In other examples, the thermal model 201 may use other voltages or currents to determine an expected rate of temperature change of the power converter 100, such as the input voltage $V_{in}$, the input current, the voltage or current across the input or output windings of the transformer 130, etc.. The relationship between certain currents and/or voltages and the power converter's 100 temperature may be determined by experiment or using electronics principles.

The summer 202 is arranged to receive the expected temperature change $\Delta T$ of the power converter 100 from the thermal model 201 and an initial temperature of the power converter 100. The summer 202 is configured to add the expected temperature change $\Delta T$ to the initial temperature of the power converter 100 to determine an estimate of the temperature of the power converter 100.

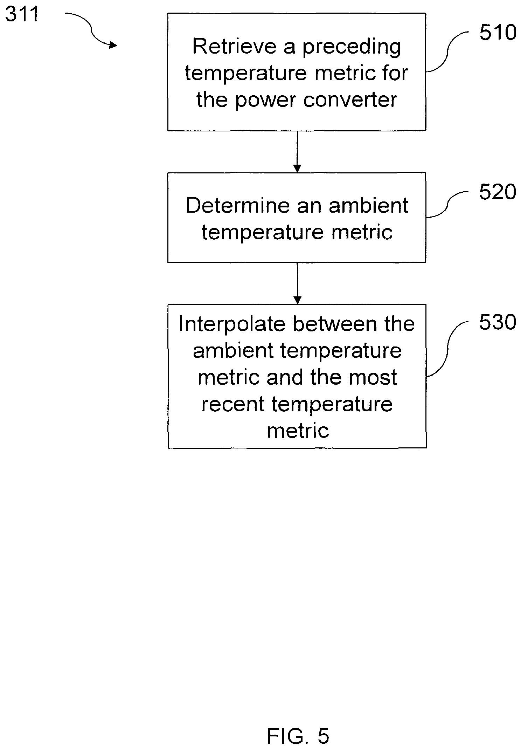

The controller 150 is arranged to determine the initial temperature based on the temperature of the power converter 100 when it was most recently switched off, the period of time that has elapsed since it was switched off, and the ambient (e.g. surrounding) temperature. This approach accounts for the possibility that the power converter 100 may already be at a higher temperature than the ambient temperature when it is switched on, e.g. owing to an insufficient time period having elapsed to allow the power converter 100 to cool down to the ambient temperature since it was last used. This approach is explained in more detail with reference to Figure 5.

The limit map 205 is arranged to receive the estimated temperature of the power converter and determine a value of a difference factor $I_{norm}$ for the received temperature. In this example, the limit map 205 uses a look-up table to determine a value of the difference factor $I_{norm}$ for the received temperature.

If the received temperature is below a reference temperature, the difference factor has a value of one. If the received temperature is above a reference temperature, the value of the difference factor is less than one. If the received temperature is greater than or equal to a maximum temperature, which is greater than the reference temperature, the value of the difference factor is zero.

The multiplier 206 is arranged to receive the difference factor $I_{norm}$ as an output from the limit map 205, and multiply a baseline value of a control parameter with the difference factor $I_{norm}$ (i.e. a value between zero and one depending on the estimated temperature) to provide an adjusted value of the control parameter.

The second multiplier 207 is arranged to square the output current $I_{out}$ (provided by the multiplier 206) to provide the square of the output current $I_{out}^2$ to the thermal model 201.

The baseline value of the controller parameter is a value of the control parameter that would typically be used to control operation of the power converter 100, e.g. in the absence of the closed loop thermal estimator 200. Examples of baseline control parameters may include a target output voltage $V_{out}$, a target output current $I_{out}$, an inverter 110 pulse width, an inverter 110 switching frequency or the like. The controller 150 is arranged to use the adjusted value of the control parameter to control the power converter's operation, i.e. instead of the baseline value of the control parameter before adjustment.

In this example, the control parameter used is the current provided to the load, and the baseline value of this control parameter is load's $R_L$ current demand. Therefore, the adjusted control parameter is the current that the power converter 100 is actually arranged to provide to the load $R_L$. Thus, the closed loop thermal estimator 200 is configured so that, in use, the power converter 100 provides an output current $I_{out}$ close to (or equal to) to the load's $R_L$ current demand when the estimated temperature is lower than the reference temperature and a reduced current when the estimated temperature is higher than the reference temperature.

Using this approach, it is possible to allow the power converter 100 to heat to the reference temperature, and reduce further heating by reducing the current $I_{out}$ to the load $R_L$ as the estimated temperature increases above the reference temperature. Once the temperature exceeds the maximum temperature, current $I_{out}$ to the load $R_L$ is further reduced to help prevent any further heating.

This approach can be used to allow the power output to exceed the rated power output, while still preventing over-heating. Thus, smaller, lighter and/or cheaper power converters can be used in applications that may require the power converter 100 to exceed its rated power output, e.g. for relatively short periods of time or when the ambient temperature is relatively low (thus providing relatively high external cooling of the power converter 100). As previously explained, the current $I_{out}$ (or voltage $V_{out}$) to the load $R_L$ may be controlled by controlling the inverter's 110 switching frequency or duty cycle.

While this example uses a thermal model 201 to determine the temperature of the power converter 100, in other examples this may not be necessary. For instance, a temperature sensor may be used to measure the temperature of the power converter 100 directly. However, by using a thermal model 201, it may not be necessary to have a temperature sensor configured to measure the temperature of the power converter 100 directly. This may be beneficial in applications that are particularly size, cost and/or weight sensitive, such as aerospace applications.

While, in this example, the controller 150 is arranged to determine the temperature of the power converter 100 directly, it will be understood that any (e.g. arbitrary) metric indicative of the temperature may be used instead.

Merely stopping the supply of current $I_{out}$ to the load $R_L$ when the temperature reaches a temperature limit may be sufficient to prevent the power converter 100 from overheating. However, it may be beneficial to reduce the current $I_{out}$ supplied to the load $R_L$ gradually as the temperature approaches the temperature limit, e.g. to avoid an abrupt loss of power to the load $R_L$.

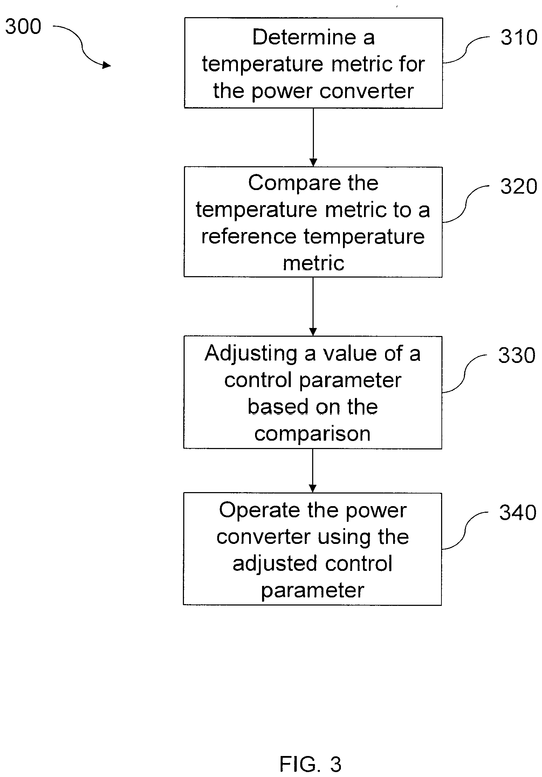

Figure 3 shows a method 300 of operating a power converter, such as the power converter 100 shown in Figure 1, using a closed loop thermal estimator, such as the closed loop thermal estimator 200 shown in Figure 2.

The first step 310 of the method 300 is to determine a temperature metric for the power converter. This temperature metric is indicative of the temperature of the power converter, and in some examples the temperature metric is the temperature of the power converter. This may be determined by modelling the temperature, e.g. using a thermal model as outlined in the description of Figure 2.

The second step 320 of the method 300 is to compare the temperature metric, e.g. the temperature of the power converter, to a reference temperature metric representative of a reference temperature. The reference temperature metric may be the reference temperature itself.

The next step 330 of the method 300 is to adjust a value of a control parameter used to control an output voltage and/or output current of the power converter based on the comparison of the temperature metric to the reference temperature metric. This includes adjusting the value of the control parameter in a manner that reduces the power converter's (e.g. target) output current and/or voltage if the comparison indicates that the power converter's temperature exceeds the reference temperature (associated with the reference temperature metric).

This step 330 includes adjusting the value of the control parameter so that the output voltage and/or current become progressively smaller as the temperature metric increases above the reference temperature metric. In this example, the output current and/or voltage is reduced to zero if the temperature metric exceeds a maximum temperature metric, representative of a maximum temperature of the power converter.

As outlined in the description of the previous figures, examples of control parameters may include inverter switching frequency, inverter pulse width, target output voltage, target output current, or the like. The original value of the control parameter before it is adjusted may be a baseline value, i.e. a control parameter that would otherwise be used to operate the power converter in the absence of adjustment by the closed loop thermal estimator.

The next step 340 of the method 300 is to use the adjusted control parameter to operate the power converter. Thus, the method 300 may be used to allow the power converter to operate beyond its rated power output in a manner that ensures it does not reach a certain temperature, e.g. a temperature slightly greater than a reference temperature that corresponds to the reference temperature metric.

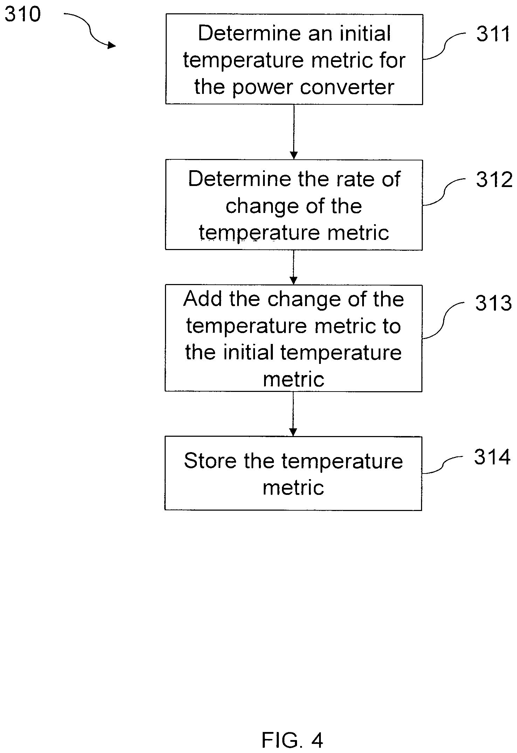

Figure 4 shows a more detailed breakdown of the method step 310, shown in Figure 3, of determining a temperature metric for, e.g. a temperature of, the power converter.

The first step 311 shown in Figure 4 is to determine an initial temperature metric indicative of the power converter's initial temperature. In this example, the temperature metric is the temperature of the power converter. Thus, the initial temperature metric is the power converter's initial temperature.

While the power converter's initial temperature may be measured directly, this requires a temperature sensor arranged to measure the temperature of the power converter. Hence, weight, cost and/or size savings may be made if the initial temperature is determined without direct measurement.

As mentioned previously, the power converter's initial temperature may be higher than the ambient temperature, e.g. if the power converter has been used recently. Therefore, an approach may be required that takes this into account. The method step 311 of determining the power converter's initial temperature used in this example is explained in more detail in the description of Figure 5.

The second step 312 shown in Figure 4 is to determine the change of the temperature metric for the power converter's period of operation, e.g. the change of the power converter's temperature for this period of operation. This may be achieved by using a thermal model, such as the thermal model 201 shown in Figure 2.

The third step 313 of the method 310 of determining a temperature metric for the power converter is to add the change of the temperature metric to the initial temperature metric to provide a present temperature metric, representative of a present temperature of the power converter, e.g. the present temperature of the power converter itself.

A fourth step 314 of the method 300 is to store the temperature metric determined in the third step 313. Thus, it is possible to use the stored temperature metric to determine the initial temperature metric in the first step 311 if the power converter is turned off and subsequently turned back on. Optionally, this includes storing a time associated with the temperature metric so that the period of time since the temperature metric was stored can be used when determining a new initial temperature metric for the power converter.

Figure 5 shows a breakdown of the method step 311 of determining an initial temperature metric for the power converter shown in Figure 4. The temperature metric used in this example is the temperature. Therefore, the initial temperature metric is the (e.g. estimated) initial temperature of the power converter.

The first step 510 of this method 311 is to retrieve a preceding temperature metric of the power converter (e.g. the temperature of the power converter when it was switched off most recently). This may be retrieved by loading the preceding temperature metric of the power converter from a memory, or receiving it from an external source.

The second step 520 of the method 311 is to determine an ambient temperature metric for the power converter's surrounding (e.g. the ambient temperature of the power converter's surroundings). This may be measured, received from an external source, or a certain (e.g. pre-set) value may be used as the ambient temperature metric.

The third step 530 of the method is to interpolate between the ambient temperature metric and the preceding temperature metric of the power converter to determine the initial temperature metric of the power converter.

If it is known, the period of time that the power converter has been off for may be used to interpolate between these values. For instance, a linear function or a non-linear function may be used to estimate the power converter's cooling rate with respect to time while it is off to determine an initial temperature metric for the power converter.

If the time period of time that the power converter has been off for is not known, a certain proportion of the difference between the ambient temperature and the temperature when the power converter was turned off most recently may be added to the ambient temperature to determine the initial temperature. This approach may also be used even if the period of time that the power converter has been off for is known.

For instance, depending on the application, 50%, 75%, 90%, 100%, etc. of the difference between the preceding temperature metric and the ambient temperature metric may be added to the ambient temperature metric to determine the initial temperature metric. If 100% of the difference is added to the ambient temperature metric, this is equivalent to using the preceding temperature metric as the initial temperature metric.

Using an initial temperature metric relatively close, or equal, to the preceding temperature metric may be appropriate if there is a relatively high risk of the power converter overheating and/or the hazards associated with (i.e. the potential impacts of) the power converter overheating are relatively severe.

Using an initial temperature metric closer to the ambient temperature metric may be appropriate if there is a relatively low risk of the power converter overheating and/or the hazards associated with the power converter overheating are not particularly severe.

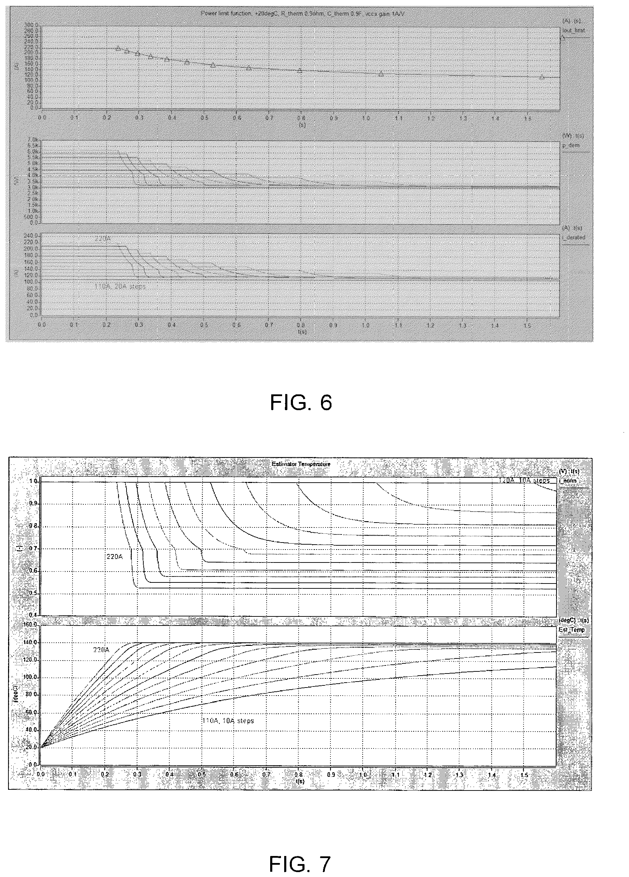

Figure 6 shows the output current and power as a function of time for a power converter, operated using a closed loop thermal estimator, with a range of different current demands. In this example, the power converter has the same voltage demand for each of the current demands. Additionally, the ambient temperatures are the same.

As can be seen in Figure 6, when the current demand is high, it is necessary to reduce the current supplied to the load relatively quickly. This is due to the relatively fast temperature increase of the power converter caused by the high current. Conversely, when the current demand is relatively low the power converter can provide the current demanded by the load for longer before it is necessary to reduce the output current.

As the temperature approaches the temperature limit, the current provided to the load reduces until it causes no further increase in temperature. At this point, steady-state operation is reached, where the power converter operates at a constant temperature. In this example, steady state operation is reached when the current is approximately 110 amps.

Figure 7 shows the value of the difference factor that is multiplied with the baseline value of the control parameter (which in this example is the current demand) to provide the adjusted control parameter (which in this example is the output current). The temperature of the power converter as a function of time is also shown. The examples in Figure 7 correspond to the same examples shown in Figure 6.

Figure 7 shows that the current is not adjusted until the temperature of the power converter reaches the reference temperature of approximately 140°C. At this point, the output current is reduced by multiplying a baseline target output current with a difference factor $I_{norm}$. As the temperature of the power converter continues to increase, the value of the difference factor $I_{norm}$ is reduced, so as to reduce the output current, until steady-state operation is reached (when the output current is approximately 110 amps).

The steady state temperature of the of the power converter in this example is a temperature of approximately 140 degrees Celsius. This is slightly greater than the reference temperature used by the closed loop thermal estimator, but below the maximum temperature (as it can be seen that the difference factor $I_{norm}$ never reaches zero). In other examples, the temperature of the power converter may overshoot the maximum temperature, e.g. by an acceptable amount, if the current demand is very high initially.

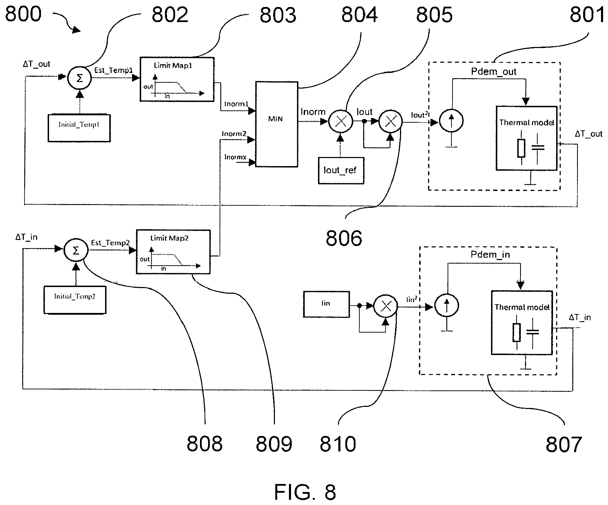

Figure 8 shows an example in which operation of a power converter is controlled using a computer implemented closed loop thermal estimator 800 based on temperatures of each of a plurality of components of the power converter.

The closed loop thermal estimator 800 includes a first thermal model 801, a first summer 802, a first limit map 803, a multiplexer 804, a first multiplier 805, a second multiplier 806, a second thermal model 807, a second summer 808, a second limit map 809, and a third multiplier 810. In this example, each of the components of the closed loop thermal estimator 800 are computer implemented. In other examples, any of the components of the closed loop thermal estimator 800 (e.g. all of the components of the closed loop thermal estimator 800) may be hardware implemented.

The first thermal model 801 is arranged to determine a temperature change ΔT_out of the a first component of the power converter using the power converter's, e.g. target, output current, and to provide this temperature change to the first summer 802. The temperature of the first component is dependent on the power converter's output current.

The first summer 802 is configured to add the temperature change ΔT_out of the first component of the power converter to an initial temperature of the first component of the power converter Initial_Temp1, to provide an estimated temperature of the first component of the power converter Est_Temp1.

The first limit map 803 is configured to compare the estimated temperature Est_Temp1 of the first component of the power converter to a first reference temperature to provide a first difference factor $I_{norm1}$ to the multiplexer 804.

The second thermal model 807 is arranged to determine a temperature change ΔT_in of a second component of the power converter using the power converter's input current, and to provide this temperature change to the second summer 808. The temperature of the second component is dependent on the power converter's input current.

The second summer 808 is configured to add the temperature change ΔT_in of the second component of the power converter to an initial temperature of the second component of the power converter Initial_Temp2, to provide an estimated temperature of the second component of the power converter Est_Temp2. The initial temperature of the first and second components of the power converter may be the same, or they may be different.

The second limit map 809 is configured to compare the estimated temperature Est_Temp2 of the second components of the power converter to a second reference temperature to provide a second difference factor $I_{norm2}$ to the multiplexer 804. The second reference temperature may be the same as, or different to, the first reference temperature.

The multiplexer 804 is arranged to receive the difference factors from two or more limit maps, and output the lowest of the received difference factor $I_{norm}$.

The first multiplier 805 is arranged to multiply the output $I_{norm}$ of the multiplexer 804 with a baseline output current $I_{out\_ref}$ of the first power converter to provide an adjusted output current $I_{out}$ of the first power converter. This adjusted output current $I_{out}$ is the target output current of the first power converter.

The first and second components are not thermally coupled, and therefore the first and second temperatures are independent of one another. As previously mentioned, the temperature of the first component depends on the power converter's output current, while the temperature of the second component depends on the power converter's input current. Therefore, the power converter's output current may need to be reduced to reduce heating of the first component, while the power converter's input current may need to be reduced to reduce heating of the second component.

It is possible to control the input current $I_{in}$ and/or the output current $I_{out}$ based on the output of the multiplexer 804. Hence, it is possible to control the power converter so as to reduce the heating of either, or both, of the first or second components if necessary to prevent the overheating.

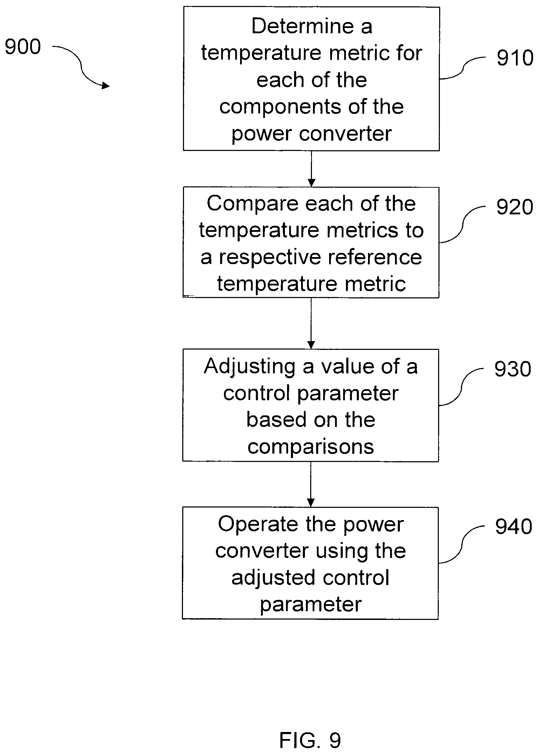

Figure 9 shows a, e.g. corresponding, method of controlling operation of a power converter, including a first and a second component. A temperature of each of a plurality of components depends on a control parameter, e.g. a switching frequency of the power converter's inverter.

The first step 910 of the method 900 is to determine a temperature metric for each of the plurality of components of the power converters. One or more of the temperature metrics may be determined using one or more respective thermal models.

The second step 920 of the method 900 is to compare each of the plurality of temperature metrics to a respective reference temperature metric. Two or more of the components of the power converter may have the same reference temperature metric.

The third step 930 of the method is to adjust a value of the first power converter's control parameter, e.g. the switching frequency of the power converter's inverter, based on the second step 920. This may include reducing the output current of the first power converter to help limit a further temperature increase of a first component of the power converter or reducing the input current to limit further temperature increase of a second component of the power converter. The first component's temperature may depend on the output current, while the second component's temperature may depend on the input current.

The fourth step 940 of the method is to operate the first power converter using the adjusted control parameter.

Power converters rated for a high output power are typically larger, heavier and/or more expensive than those rated for a lower output power. Therefore, cost, weight and/or size savings may be made by operating a power converter above its power rating, e.g. when it only needs to operate beyond its rated power for relatively short periods of time, when compared with using a power converter rated for a higher output power.

This requires a control scheme that enables a power converter to be operated above its rated power safely, i.e. without excessive over-heating. This application discloses a control scheme that may be used for this purpose, thus enabling cost, weight and/or size savings, e.g. in applications where these are important factors (such as aerospace applications). Specific (e.g. aerospace) applications for power converters operated in this manner include power distribution systems, air management systems, electric propulsion systems, actuation systems and fuel pumping systems.

It will be appreciated by those skilled in the art that this disclosure has been illustrated by describing one or more specific examples thereof, but is not limited to these examples; many variations and modifications are possible, within the scope of the accompanying claims.

Features of any of the previously described examples may, wherever appropriate, be applied to any other of the described examples. It should be understood that these examples are not necessarily distinct, but may overlap. Furthermore, unless stated otherwise, it will be understood that features of any of the preceding examples may not be inextricably linked with other features of the examples provided herein. Therefore, it is entirely possible that embodiments of the invention may only have a sub-set of the features of the previously provided examples and/or features of the previously described examples may be interchanged with other features, unless stated otherwise.

**Claims**

1. A method of operating a power converter for converting an input voltage and/or an input current to an output voltage and/or an output current;
   wherein the method comprises:

   determining a temperature metric, representative of a temperature of the power converter during a period of operation, based on a temperature of the power converter at an end of a preceding period of operation;
   comparing the temperature metric to a reference temperature metric, representative of a reference temperature;
   determining a value of a control parameter, used to control the output current and/or the output voltage of the power converter, based on the comparison of the temperature metric to the reference temperature metric; and
   operating the power converter using the control parameter so as to control the temperature of the power converter.

2. The method as claimed in any preceding claim, comprising:
   determining the temperature metric without direct measurement of the temperature of the power converter.

3. The method as claimed in any preceding claim, wherein determining the temperature metric is based on a duration of time between the period of operation and the preceding period of operation.

4. The method as claimed in any preceding claim, wherein determining the temperature metric is based on an ambient temperature.

5. The method as claimed in any preceding claim, wherein determining the value of the control parameter comprises interpolating between two values based on the comparison of the temperature metric to the reference temperature metric.

6. The method as claimed in any preceding claim, wherein determining the value of the control parameter comprises adjusting a baseline value of the control parameter based on the temperature metric.

7. The method as claimed in claim 6, wherein the method comprises:

   determining a difference factor with a value between zero and one, exclusive, based on the comparison of the temperature metric with the reference temperature metric;
   wherein adjusting the baseline value of the control parameter comprises:
   multiplying the baseline value of the control parameter with the difference factor.

8. The method as claimed in claim 8, wherein determining the difference factor comprises:
   normalising a difference between the temperature metric and the reference temperature metric on a scale between one and zero;
   wherein a value of one on the scale is representative of the temperature of the power converter being less than or equal to the reference temperature.

9. The method as claimed in claim 8, wherein a value of zero on the scale is representative of the temperature of the power converter being greater than or equal to a maximum temperature metric, representative of a maximum temperature of the power converter.

10. The method as claimed in any preceding claim, wherein the power converter comprises an inverter; and
    wherein the control parameter is at least one of a switching frequency of the inverter and a pulse width of the inverter.

11. The method as claimed in any preceding claim, comprising:

    determining an initial temperature metric of the power converter, representative of the temperature of the power converter at the start of the period of operation, based on the preceding temperature metric; and
    determining the temperature metric is based on the initial temperature metric.

12. The method as claimed in claim 11, wherein determining the initial temperature metric is based on one or more of:

    a duration of time between the period of operation and the preceding period of operation; and
    an ambient temperature.

13. The method as claimed in claim 12, wherein determining the initial temperature metric comprises interpolating between the preceding temperature metric and an ambient temperature metric, representative of the ambient temperature.

14. The method as claimed in any preceding claim, comprising:

    determining a second temperature metric, representative of a second temperature of the power converter;
    determining the value of the control parameter of the power converter based on the second temperature metric; and
    operating the power converter using the control parameter so as to control the second temperature of the power converter.

15. A power converter for converting an input voltage and/or an input current to an output voltage and/or an output current;
    wherein the power converter comprises a controller arranged to:

determine a temperature metric, representative of a temperature of the power converter during a period of operation, based on a temperature of the power converter at an end of a preceding period of operation; compare the temperature metric to a reference temperature metric, representative of a reference temperature; determine a value of a control parameter, used to control the output current and/or the output voltage of the power converter, based on the comparison of the temperature metric to the reference temperature metric; and operate the power converter using the control parameter so as to control the temperature of the power converter.

FIG. 1

FIG. 2

300

| Determine a temperature metric for the power converter | 310 |

| Compare the temperature metric to a reference temperature metric | 320 |

| Adjusting a value of a control parameter based on the comparison | 330 |

| Operate the power converter using the adjusted control parameter | 340 |

FIG. 3

310

311 — Determine an initial temperature metric for the power converter

312 — Determine the rate of change of the temperature metric

313 — Add the change of the temperature metric to the initial temperature metric

314 — Store the temperature metric

FIG. 4

311

510 — Retrieve a preceding temperature metric for the power converter

520 — Determine an ambient temperature metric

530 — Interpolate between the ambient temperature metric and the most recent temperature metric

FIG. 5

FIG. 6

FIG. 7

FIG. 8

900

| Determine a temperature metric for each of the components of the power converter | 910 |

| Compare each of the temperature metrics to a respective reference temperature metric | 920 |

| Adjusting a value of a control parameter based on the comparisons | 930 |

| Operate the power converter using the adjusted control parameter | 940 |

FIG. 9

Europäisches
Patentamt
European
Patent Office
Office européen
des brevets

## EUROPEAN SEARCH REPORT

Application Number

EP 24 38 6093

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/196483 A1 (KOBAYASHI HISAAKI [JP] ET AL) 23 June 2022 (2022-06-23)<br>* paragraphs [0005] - [0008]; figure 1 *<br>* paragraphs [0027] - [0031] *<br>* paragraphs [0041] - [0051] *<br>* paragraphs [0065], [0072], [0075], [0086], [0096] - [0101] *<br>----- | 1-15 | INV.<br>H02M1/32<br>H02M3/335 |
| X | US 2005/269150 A1 (FUJIMOTO CHIAKI [JP] ET AL) 8 December 2005 (2005-12-08)<br>* paragraphs [066*] - [0073]; figures 2,7-9 *<br>----- | 1,15 | |
| X | JP 2020 088911 A (TOYOTA MOTOR CORP) 4 June 2020 (2020-06-04)<br>* paragraphs [0042] - [0054]; figures 2,6 *<br>----- | 1,15 | |
| X | JP 2012 095415 A (MURATA MACHINERY LTD) 17 May 2012 (2012-05-17)<br>* paragraphs [0026] - [0028]; figure 1 *<br>----- | 1,15 | **TECHNICAL FIELDS SEARCHED (IPC)**<br><br>H02M |

The present search report has been drawn up for all claims

| Place of search | Date of completion of the search | Examiner |
|---|---|---|
| The Hague | 14 January 2025 | Gusia, Sorin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 38 6093

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2025

| Patent document cited in search report | | Publication date | Patent family member(s) | | Publication date |
|---|---|---|---|---|---|
| US 2022196483 | A1 | 23-06-2022 | JP | 7207243 B2 | 18-01-2023 |
| | | | JP | 2021044983 A | 18-03-2021 |
| | | | US | 2022196483 A1 | 23-06-2022 |
| | | | WO | 2021049501 A1 | 18-03-2021 |
| US 2005269150 | A1 | 08-12-2005 | CN | 1704300 A | 07-12-2005 |
| | | | DE | 102004057184 A1 | 05-01-2006 |
| | | | JP | 3931181 B2 | 13-06-2007 |
| | | | JP | 2005343293 A | 15-12-2005 |
| | | | KR | 20050115440 A | 07-12-2005 |
| | | | US | 2005269150 A1 | 08-12-2005 |
| JP 2020088911 | A | 04-06-2020 | JP | 7151402 B2 | 12-10-2022 |
| | | | JP | 2020088911 A | 04-06-2020 |
| JP 2012095415 | A | 17-05-2012 | JP | 5724292 B2 | 27-05-2015 |
| | | | JP | 2012095415 A | 17-05-2012 |

EPO FORM P0459

For more details about this annex : see Official Journal of the European Patent Office, No. 12/82